# EUROPEAN PATENT SPECIFICATION

(11) **EP 2 273 785 B1**
(45) Date of publication and mention of the grant of the patent: **28.09.2016**
(21) Application number: 09737674.3
(22) Date of filing: 23.04.2009
(51) Int. Cl.: H04N 7/16

(54) **PLAY CONTROLLING METHOD, DEVICE AND SYSTEM**
VERFAHREN, VORRICHTUNG UND SYSTEM FÜR ABSPIELSTEUERUNG
PROCÉDÉ, DISPOSITIF ET SYSTÈME DE COMMANDE DE LECTURE

(30) Priority: 30.04.2008 CN 200810094991
(43) Date of publication of application: 12.01.2011
(73) Proprietor: Huawei Technologies Co., Ltd., Longgang District Shenzhen, Guangdong 518129 (CN)
(72) Inventor: ZHANG, Ni, Longgang District 518129 Shenzhen (CN); SHI, Youzhu, Longgang District 518129 Shenzhen (CN); MAO, Lingzhi, Longgang District 518129 Shenzhen (CN); ZHANG, Dewen, Longgang District 518129 Shenzhen (CN)
(74) Representative: Isarpatent
(86) International application number: PCT/CN2009/071417
(87) International publication number: WO 2009/132564

(56) References cited:
- WO-A2-2006/093739
- CN-A- 101 115 185
- CN-A- 101 119 266
- US-A1- 2006 041 688
- US-A1- 2007 294 553

## Description

### FIELD OF THE TECHNOLOGY

The present invention relates to the field of multimedia technologies, and more particularly to a play control method, device, and system.

### BACKGROUND OF THE INVENTION

As a brand new technology of interactive services, Internet Protocol Television (IPTV) service integrates the Internet, multimedia, and communication by using a broadband cable TV network, and provides various technologies including digital TV to home users. The IPTV service uses an IP Multimedia Subsystem (IMS) defined in the 3rd Generation Partnership Project (3GPP) as a core network. The IMS adopts an IP packet domain as its bearer channel of control signaling and media transmission, and adopts the Session Initiation Protocol (SIP) for call control signaling, so as to realize separation of service management, session control, and bearer access. A user can enjoy the IPTV service at home through a computer or a network Set Top Box (STB) and an ordinary TV set, and may also enjoy the IPTV service through a mobile terminal. The IPTV service, which effectively combines a TV network, a telephone network, and the Internet together, is the most representative service in convergence of the three networks and has attracted more and more attention in the industry. With the wide application of the IPTV service, users have more and more requirements for the service, and require the IPTV service to support third party play control.

In the IPTV service in the prior art, a user using the service actively joins or leaves a program, or a user actively performs operations such as fast forward/fast rewind/pause on a currently viewed program, but the IPTV service in the prior art does not support a network or a third party user to control the user with respect to performing the above operations.

The document CN 101119266 A relates to a method for playing multimedia controlled by a mobile terminal. It discloses that the mobile terminal controls the home gateway to play a multimedia resource in a home network.

The document CN 101115185 A relates to a method for playing sound and video through a third party in IPTV (Internet Protocol Television). In particular, it discloses that a terminal equipment sends a media play request to a media visit service system, and the media visit service system responds to the media play request, acquiring a user information from a EPG (Entertainment Program Guide) system, and acquiring a address for media play corresponding to the media play request according to the user information, thereby generating a media play page according to the address for media play and sending it to the terminal equipment to play the media.

The document WO 2006/093739 A2 relates to a broadband communications system, and particularly to network multimedia systems having a multi-room interactive network guide. Particularly, it discloses that a primary device may receive a command from at least one remote device, and both the primary device and any one or all of the remote devices may receive downstream broadband signals from the HE 120 through SIM 160.

The document US 2007/294553 A1 relates to a system and a method for remotely powering down or suspending a device. The method, system and computer program allow a device, such as a parent device, to send a power down signal to another device, such as a child device.

The document US 2006/041688 A1 relates to embodiments utilizing SIP for admission control among a plurality of multimedia devices. In particular, an exemplary unicast media session is provided. After the startup session is finished, the requested media stream is communicated from the second multimedia device to the multimedia device, the multimedia device can then communicate a selected presentation command or pause/FF/Rewind command terminate command to the second multimedia device to control the media stream transmitted by the second multimedia device.

### SUMMARY OF THE INVENTION

The present invention is directed to a play control method, device, and system, for realizing third party play control.

In an embodiment, the present invention provides a play control method, which includes the following steps:
passing, by a user terminal, a program authorization of a server;
playing, by the user terminal a authorized program on the user terminal, where the authorized program is provided by a RTSP server;
receiving, by the user terminal a control request information from a third party control entity after the third party control entity remotely monitoring the authorized program played by the user terminal and the third party control entity requesting joining the authorized program played by the user terminal; and
performing, by the user terminal, an operation of accessing the program according to the control request information.

In an embodiment, the present invention provides another play control method, which includes the following steps:
monitoring, by a third party control entity remotely a program played by a user terminal after the user terminal passes a program authorization of a server and the user terminal plays a authorized program on the user terminal, where the authorized program is provided by a RTSP server;
requesting, by the third party control entity, joining the authorized program played by the user terminal;
performing, by the third party control entity, an operation of joining the authorized program;
sending, by the third party control entity, a control request information to the user terminal for performing an operation of accessing the authorized program according to the control request information.

In an embodiment, the present invention provides a system for play control, the system comprises:
a user terminal, adapted to pass a program authorization of a server, play a authorized program on the user terminal, where the authorized program is provided by a RTSP server, receive a control request information from a third party control entity and perform an operation of accessing a program according to the control request information;
the third control entity, adapted to remotely monitor the authorized program played by the user terminal, request joining the authorized program played by the user terminal, then send the control request information to the user terminal

In embodiments of the present invention, a third party control entity sends play control request information to a play control processing entity, and the play control processing entity controls play according to program or channel control indication information included in the play control request information, so as to realize play control by the third party control entity over the play control processing entity, for example, realize play control by a network entity or a third party user terminal over a program or channel being viewed by a user.

### BRIEF DESCRIPTION OF THE DRAWINGS

FIG 1 is a flow chart of a play control method according to a first embodiment not part of the present invention;
FIG. 2 is a flow chart of a play control method according to a second embodiment not part of the present invention;
FIG. 3 is a flow chart of a play control method according to a third embodiment not part of the present invention;
FIG. 4 is a flow chart of a play control method according to a fourth embodiment not part of the present invention;
FIG. 5 is a flow chart of a play control method according to a fifth embodiment not part of the present invention;
FIG. 6 is a signaling diagram of a play control method according to a sixth embodiment not part of the present invention;
FIG. 7 is a signaling diagram of a play control method according to a seventh embodiment not part of the present invention;
FIG. 8 is a signaling diagram of a play control method according to an eighth embodiment not part of the present invention;
FIG. 9 is a signaling diagram of a play control method according to a ninth embodiment not part of the present invention;
FIG. 10 is a signaling diagram of a play control method according to a tenth embodiment not part of the present invention;
FIG. 11 is a flow chart of a play control method according to an eleventh embodiment not part of the present invention;
FIG. 12 is a flow chart of a play control method according to a twelfth embodiment of the present invention;
FIG. 13 is a flow chart of a play control method according to a thirteenth embodiment of the present invention;
FIG 14 is a flow chart of a play control method according to a fourteenth embodiment of the present invention;
FIG. 15 is a signaling diagram of a play control method according to a fifteenth embodiment of the present invention;
FIG. 16 is a structural view of a playing device according to an embodiment of the present invention;
FIG. 17 is a structural view of a play control device according to a first embodiment of the present invention;
FIG. 18 is a structural view of a play control device according to a second embodiment of the present invention; and
FIG. 19 is a structural view of a play control system according to an embodiment of the present invention.

### DETAILED DESCRIPTION OF THE EMBODIMENTS

The technical solutions of the present invention are described in further detail as follows with reference to the accompanying drawings and embodiments.

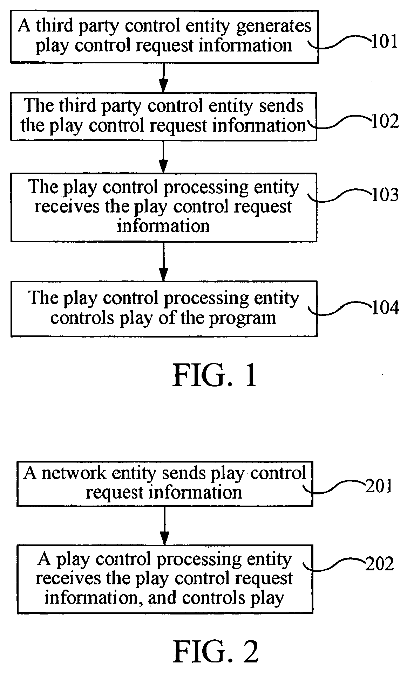

FIG. 1 is a flow chart of a play control method according to a first embodiment not part of the present invention. As shown in FIG. 1, this embodiment provides a play control method, which includes the following steps.

In step 101, a third party control entity generates play control request information, where the play control request information includes program or channel control indication information and identification information of a play control processing entity.

Specifically, a play control request may be sent by a network entity or a user terminal. The network entity is an entity such as an Application Server (AS), a Service Control Function (SCF) server, a media server, a Real Transfer Stream Protocol (RTSP) server, and the user terminal is, for example, a Set Top Box (STB), a mobile station (MS), or the like.

The generated play control request information includes program or channel control indication information and identification information of a play control processing entity. Specifically, the program or channel control indication information is for indicating specific content of the play control request, for example, indicating that the content of the play control request is requesting a user to join a channel 1, or requesting the user to leave the channel 1, or requesting the user to perform a fast forward, fast rewind, or pause operation on the channel 1; and the identification information of the play control processing entity is for indicating the play control processing entity processing the above specific operation, for example, the identification information of the play control processing entity may be an IMS public identity of an STB or an IMS identity of an MS.

In step 102, the third party control entity sends the play control request information to the play control processing entity according to the identification information of the play control processing entity.

Specifically, the third party control entity sends the play control request information to the play control processing entity according to the identification information of the play control processing entity. When a specific trigger condition is met, the third party control entity sends the play control request information. The specific trigger condition refers to a specific time or event condition, that is, the play control request information is triggered by the specific time or event condition. The specific time or event condition herein has different meanings in different application scenarios. For example, if a user sets to join himself/herself in viewing News Broadcast of CCTV-1 at 7 p.m., the network entity sends play control request information to a terminal of the user at 7 p.m., and the condition set at this time is a specific time condition; the network entity detects an account balance of a Pay Per View (PPV) user in real time, and sets to actively terminate the user's viewing of a PPV program when detecting that the account balance of the user is insufficient, and the condition set at this time is a specific event condition; when a user views a program, which is uploaded to a network in real time by a network uploader, the network entity sets to actively pause the user's viewing of the program when detecting that the network uploader pauses the uploading of the program, and the condition set at this time is also a specific event condition.

In step 103, the play control processing entity receives the play control request information.

The play control processing entity receives the play control request information sent by the third party control entity, parses the play control request information, and acquires the program or channel control indication information. The play control processing entity may be a user entity such as an STB or an MS. The program or channel control indication information specifically includes program or channel control information for indicating specific content of the play control request, for example, joining a program or channel, or leaving a program or channel. The program or channel control indication information may further include program or channel information for indicating a program or channel under play control, for example, a Living TV (LTV) channel identification, a Video On Demand (VOD) program identification, a multicast address, or the like.

The program or channel control information may be program or channel join information, for example, SIP invite, refer method=invite, refer method=join, or the like; or a program or channel leave indication, for example, SIP bye, refer method=bye, refer method=leave, or the like; or program or channel operation information, that is, a processing identification carried in the request when a pause/fast forward/fast rewind operation is performed on a current program or channel, for example, SIP invite a=inactive, RTSP play Scale:-3, range:npt=now-30, RTSP pause, SIP info, refer method=play, refer method=pause, or the like. The program or channel operation information is specifically program or channel fast forward, fast rewind, or pause information.

Specifically, when the program or channel control information carried in the play control request information is a program or channel join indication, the control of play according to the program or channel control indication information specifically includes: joining, by the user, the program or channel according to the control information of the program or channel join information and the program or channel information. The user may leave a currently viewed program or channel, and join the program or channel indicated in the program or channel information, or directly join the program or channel indicated in the program or channel information to acquire a media stream for viewing. When the program or channel control information carried in the play control request information is a program or channel leave indication, the control of play according to the program or channel control indication information specifically includes: leaving the program or channel according to the control information of the program or channel leave information and the program or channel information, that is, leaving the program or channel indicated in the program or channel information or a currently viewed channel by the user. When the program or channel control information carried in the play control request information is program or channel operation information, the user performs a fast forward, fast rewind, or pause operation on the program or channel indicated in the program or channel information or a currently viewed program or channel.

In step 104, the play control processing entity controls play of the program or channel according to the program or channel control indication information.

Play is controlled according to the program or channel control information and program or channel information in the program or channel control indication information introduced in step 103. If the program or channel control information carried in the play control request information is a program or channel join indication, the information of the program or channel to be controlled is the channel 1, and the identification information of the play control processing entity is an IMS public identity of an STB 1, the STB 1 joins the viewing of the channel 1 under the control of a network entity or a third party user terminal; if the program or channel control information carried in the play control request information is a program or channel leave indication, the information of the program or channel to be controlled is a channel 2, and the identification information of the play control processing entity is an IMS public identity of an STB 2, the STB 2 leaves the viewing of the channel 2 under the control of a network entity or a third party user terminal; and if the program or channel control information carried in the play control request information is a program or channel fast forward indication, the information of the program or channel to be controlled is a channel 3, and the identification information of the play control processing entity is an IMS public identity of an STB3, the STB3 performs a fast forward operation on the channel 3 under the control of a network entity or a third party user terminal.

This embodiment provides a play control method, where a network entity or a third party user terminal sends play control request information, and a play control processing entity performs a corresponding play control operation according to program or channel control indication information in the play control request information. In this way, the control by the network entity or the third party user terminal over a program or channel of a user terminal is realized.

FIG. 2 is a flow chart of a play control method according to a second embodiment not part of the present invention. As shown in FIG. 2, this embodiment provides a play control method, which includes the following steps.

In step 201, a network entity sends play control request information, where the play control request information includes program or channel control indication information.

Specifically, when a specific time/event condition is met, the network entity sends play control request information, that is, the play control request information is triggered by a specific time or event condition. Before determining whether the specific time/event condition is met, the network entity further needs to preset the specific time/event condition, and the process of presetting the specific time/event condition may be completed by a user terminal or the network entity. For example, if the user terminal presets the network entity to control a user to join the viewing of the News Broadcast program of CCTV-1 at 7 p.m., upon detecting that the preset time condition is met at 7 p.m., the network entity sends play control request information to the user, and joins the user in the viewing of the News Broadcast program of CCTV-1. For another example, if the network entity presets to actively terminate the user's viewing when an account balance of a PPV user is insufficient, upon detecting that the preset event condition is met, the network entity sends play control request information to the user, and actively terminates the user's viewing of a PPV program. For another example, if the network entity sets to make a user's operation work on the viewing of a third party user when receiving the user's request for a fast forward operation of a program being viewed by the third party user, upon detecting that the preset event condition is met, the network entity sends play control request information to the third party user, and actively fast-forwards the program of the third party user when the user performs the fast forward operation.

The play control request information carries program or channel control indication information. The program or channel control indication information is for indicating specific content of the play control request, for example, indicating that the content of the request is requesting a user to join a channel 1, or requesting a user to leave the channel 1, or requesting a user to perform a fast forward, fast rewind, or pause operation on the channel 1.

In step 202, a play control processing entity receives the play control request information, and controls play of a program or channel according to the program or channel control indication information.

The play control processing entity receives the play control request information sent by the network entity, parses the play control request information, and acquires the program or channel control indication information. The program or channel control indication information may include program or channel control information. The program or channel control information is specifically program or channel join information, program or channel leave information, or program or channel operation information. The program or channel operation information is specifically program or channel fast forward, fast rewind, or pause information, and program or channel information is specifically an indication of a program or channel to be joined, left, or paused/fast-forwarded/fast-rewound.

This embodiment provides a play control method, where a network entity sends play control request information, and a terminal entity performs a corresponding play control operation according to indication information carried in the play control request information. In this way, the control by the network entity over a program or channel of the user terminal is realized.

During the specific implementation, the network entity actively joins the user terminal in a program or channel in many cases, for example, if the user terminal is currently playing another program and an ordered PPV program begins to play, the network automatically joins the user terminal in the PPV program; when the channel 1 currently played on the user terminal begins to play an advertisement, the user switches to a channel 2, and after the advertisement of the channel 1 finishes playing, the network controls the user terminal to automatically switch to the original channel 1 for playing. The network entity also actively makes the user terminal leave a program or channel in many cases, for example, during the playing of a program by the user terminal, a PPV AS actively terminates the playing of the PPV program by the user terminal when finding that an account balance of a PPV user is insufficient. The network entity also performs a pause/fast forward/fast rewind operation on the user terminal in many cases, for example, when the user terminal plays content which is uploaded in real time by an uploader, if the uploader pauses the uploading, the content being played by the user terminal is also paused. The play control in several typical application scenarios will be explained as follows with reference to specific embodiments.

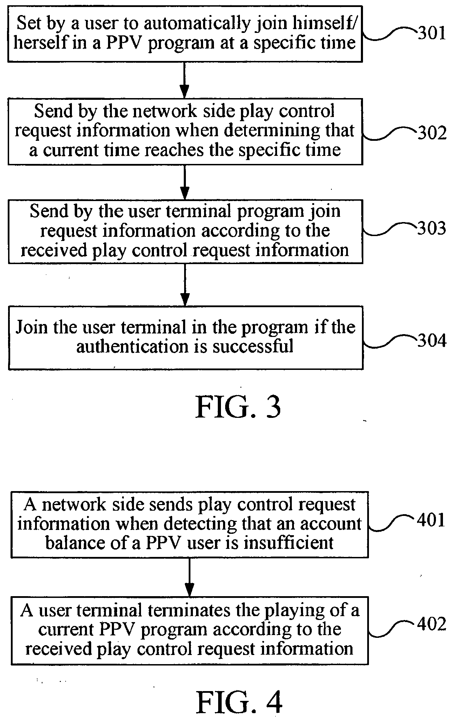

FIG. 3 is a flow chart of a play control method according to a third embodiment not part of the present invention. In this embodiment, the application scenario is as follows: When a user terminal is currently playing another program, and a PPV program at 8 p.m. ordered by the user terminal begins to play, a network entity automatically switches the user terminal to the PPV program for playing. Program or channel control information sent by the network entity that is obtained by parsing is specifically program or channel join information, program or channel information is specifically the PPV program ordered by the user terminal, and identification information of a play control processing entity is specifically an identity of the user terminal, that is, the play control processing entity in this embodiment is specifically the user terminal. The condition for the network entity to send play control request information in this embodiment is a specific time condition, that is, 8 p.m. FIG. 3 shows the specific implementation process of the play control method in this embodiment, where the PPV program is a media stream delivered in a multicast mode.

In step 301, a user sets to require a network entity to automatically join a user terminal in an ordered PPV program at a specific time.

In this embodiment, 8 p.m. is used as the specific time set by the user. Before the user sets the specific time condition, the method further includes ordering by the user the PPV program from the network entity. The user may order the PPV program through the HyperText Transfer Protocol (HTTP) or SIP or at a business hall or through a call. After ordering the PPV program, the user may set the specific time condition in this step through the HTTP or SIP again, or set the specific time condition while ordering the PPV program at the business hall or through the call. That is, the user sets the network entity to automatically join the user terminal in the playing of the ordered PPV program at 8 p.m. In addition, the user may also set the specific time condition through a network. The setting operation is performed through the network by default, and in this case, this step is not needed.

In step 302, the network entity sends play control request information when determining that a current time reaches the specific time set by the user.

The network entity performing operations of the network entity in this embodiment is a PPV AS, and the PPV AS sends play control request information when determining that the current time is 8 p.m. The play control request information carries program or channel control information, program or channel information, and identification information of a play control processing entity. Specifically the program or channel control information is program or channel join information, the program or channel information is the PPV program ordered by the user, and the identification information of the play control processing entity is an identity of the user terminal. The play control request information is then sent to the user terminal through an IP IMS core. The play control request information is for inviting the user terminal to join the ordered PPV program. After receiving the play control request information, the user terminal returns a response 200OK to the PPV AS through the IMS core.

In step 303, the user terminal sends a program or channel join request according to the received play control request information.

Specifically, in this step, the user terminal sends request information for joining the PPV program to the PPV AS according to the PPV program information ordered by the user, where the request information carries a program identification of the PPV program. After receiving the request information of the user terminal, the PPV AS authenticates the user terminal according to the program identification of the PPV program carried in the request information, and determines whether the user terminal has ordered the PPV program in any mode in step 301, and if the user terminal has ordered the PPV program, the authentication is successful; otherwise, the authentication fails.

In step 304, according to the authentication result, if the authentication is successful, the network entity joins the user terminal in the program or channel; otherwise, the process ends.

The PPV AS performs subsequent operations according to the authentication result of authenticating the user terminal, and if the authentication is successful, the PPV AS returns a response 200OK to the user terminal through the IMS core, where the returned response 200OK carries a multicast address of the PPV program. The user terminal, according to the multicast address corresponding to the PPV program that is carried in 200OK, leaves the currently viewed program, joins a multicast group of the PPV program, and acquires a media stream of the PPV program through a multicast replication point, and the network entity completes the whole process of actively joining the user terminal in the viewing of the PPV program.

Further, when the ordered PPV program is a media stream provided in a unicast mode, the PPV AS serves as a controller of 3rd Party Call Control (3PCC), and a Media function (MF) server providing a PPV program media stream and the user terminal respectively serve as one party in 3PCC, the PPV AS controls the establishment of a media channel between the MF and the user terminal, the user terminal receives the PPV program media stream from the MF, and subsequently, the PPV AS disconnects the media channel between the MF and the user terminal through third party control. For example, the PPV AS sends a play control request to the user terminal, where the request carries an identity of the user terminal instead of Session Description Protocol (SDP) information, and the user terminal receives the play control request, and returns a response. If the user terminal knows media coding and decoding information of the PPV program, the response carries SDP information. Then, the PPV AS sends an Invite request to the MF, where the request carries the SDP information returned by the user terminal and a PPV program identification, and the MF receives the play control request, and returns a response, so as to establish the media channel between the MF and the user terminal to begin the transfer of the media stream.

In this embodiment, a user first orders a PPV program and sets a specific time condition, and when the time condition is met, a network entity actively joins a user terminal in the PPV program for viewing, so that the user can view in real time PPV programs that he/she likes. In this way, active control by the network entity over a program played by the user terminal is realized.

This embodiment may also be applied in other scenarios. For example, when the channel 1 being played by the user terminal begins to play an advertisement; the user actively switches to a channel 2 and sets the network entity to actively join the user terminal in the playing of the channel 1 when the advertisement of the channel 1 finishes playing, where the channel 1 and the channel 2 are in the same service packet. The application scenario is as follows: the network entity performs a play control operation on a program played by the user terminal when a specific event condition is met, where the specific event condition is that the advertisement of the channel 1 finishes playing. The implementation process of this application scenario is as follows. When the channel 1 currently played by the user terminal begins to play an advertisement that the user dislikes, the user switches to the channel 2 for viewing, sends a request to a control server controlling the channel 1, and sets to rejoin the user terminal in the channel 1 after the advertisement being played by the channel 1 finishes playing, where the user may perform the above setting operation by clicking a fixed button. After receiving the setting information of the user terminal, the control server requests a channel server of the channel 1 to notify the control server after the currently played advertisement ends. The channel server of the channel 1 determines that the currently played advertisement ends and notifies the control server; the control server sends play control request information to the user terminal to indicate that the user terminal is requested to rejoin the channel 1. After receiving the play control request information, the user terminal leaves a multicast group of the channel 2, searches for a multicast address of the channel 1 from stored information, and rejoins a multicast group of the channel 1.

FIG. 4 is a flow chart of a play control method according to a fourth embodiment not part of the present invention. In this embodiment, the application scenario is as follows: A network entity actively terminates the playing of a PPV program by a user terminal when detecting that an account balance of the PPV user is insufficient. Program or channel control information sent by the network entity is specifically program or channel leave information, program or channel information is specifically a PPV program ordered by a PPV user, and identification information of a play control processing entity is specifically an identity of a PPV user terminal, that is, the play control processing entity in this embodiment is specifically the user terminal. The condition for the network entity to send play control request information in this embodiment is a specific event condition, that is, the network entity detects that the account balance of the PPV user is insufficient. As shown in FIG. 4, the specific implementation process of the play control method in this embodiment is as follows.

In step 401, a network entity sends play control request information when detecting that an account balance of a PPV user is insufficient.

The network entity performing operations of the network entity in this embodiment is also a PPV AS, and this step may be specifically as follows: During the playing of a PPV program by a PPV user terminal, the PPV AS detects an account balances of each PPV user in real time, and when detecting that an account balance of a PPV user is insufficient, the PPV AS sends play control request information. The play control request information carries program or channel control information, program or channel information, and identification information of a play control processing entity. Specifically, the program or channel control information is program or channel leave information, the program or channel information is a PPV program ordered by a PPV user, and the identification information of the play control processing entity is an identity of the PPV user terminal. The play control request information is then sent to the PPV user terminal through an IMS core. The play control request information is for indicating that the PPV user terminal is requested to exit the viewing of the ordered PPV program. After receiving the play control request information, the PPV user terminal returns a response 200OK to the PPV AS through the IMS core.

In step 402, a user terminal terminates the playing of a current PPV program according to the received play control request information.

The PPV AS actively makes the PPV user terminal leave a multicast group of the PPV program and ends the playing of the PPV program by the PPV user terminal according to program or channel control indication information carried in the play control request information, which further includes sending a leave request to the PPV AS by the PPV user terminal, and ending the playing of the PPV program by the PPV user terminal according to the received leave request by the PPV AS.

In this embodiment, during the playing of a PPV program by the PPV user terminal, the PPV AS detects an account of a PPV user in real time, and actively terminates the playing of the PPV program by the PPV user terminal when finding that the account balance is insufficient. In this way, control by a network entity over the playing of the PPV user terminal is realized, and a more rational IPTV service is achieved.

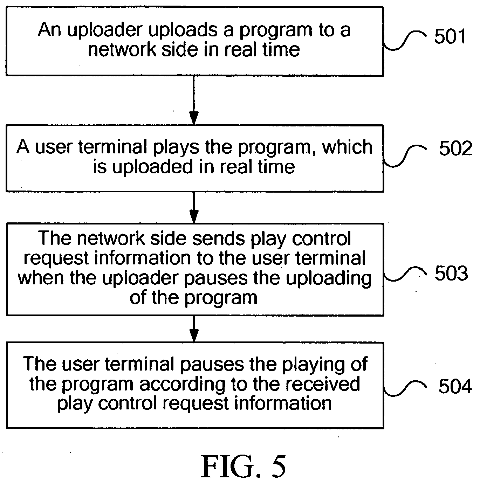

FIG. 5 is a flow chart of a play control method according to a fifth embodiment not part of the present invention. In this embodiment, the application scenario is as follows: A user views program content which is uploaded by an uploader in real time through a network, and when the uploader pauses the uploading, a user terminal that is playing the program also pauses the viewing. Program or channel control information sent by a network entity that is obtained by parsing is specifically program or channel operation information, program or channel information is specifically the uploaded program played by the user terminal, and identification information of a play control processing entity is specifically an identity of the user terminal, that is, the play control processing entity in this embodiment is specifically the user terminal. The condition for the network entity to send play control request information in this embodiment is a specific event condition, that is, the uploader pauses the uploading of the program content. As shown in FIG. 5, the specific process of the play control method in this embodiment is as follows.

In step 501, an uploader uploads a program to a network entity in real time.

The network entity performing operations of the network entity in this embodiment is a Consumer Originated Video (COV) AS, and this step is specifically as follows: The uploader uploads a program to the COV AS in real time. Before the uploader uploads the program to the COV AS, the COV AS needs to authenticate the uploader. First, the uploader sends an upload request to the COV AS. Next, the COV AS authenticates the uploader. Then, after the authentication, carried out by the COV AS, of the uploader is successful, the COV AS receives the upload request of the uploader and returns a response 200OK to the uploader, and establishes a media channel for uploading the program for the uploader. Finally, after receiving the response 200OK, the uploader begins to upload a media stream to the COV AS in real time.

In step 502, a user views the program, which is uploaded in real time.

Before the user views on a terminal the program, which is uploaded in real time by the uploader, the following steps further need to be performed. First, the user terminal sends a viewing request for viewing the uploaded program in real time to the COV AS. Next, the COV AS returns a response 200OK to the user terminal according to the received viewing request, and returns in the response 200OK an address of an RTSP server providing a media stream. Then, the user terminal sends a program transfer request to the RTSP server according to the received response 200OK, and begins to receive the media stream sent from the RTSP server, so that the user can view, in real time, on the terminal the program uploaded by the uploader to the COV AS.

In step 503, when the uploader pauses the uploading of the program, the network entity sends play control request information to the user terminal.

When the uploader pauses the uploading of the program, the uploader sends an upload pause request to the COV AS, and the COV AS sends play control request information to the user terminal playing the program according to the received upload pause request. The play control request information carries program or channel control information, program or channel information, and identification information of a play control processing entity. Specifically, the program or channel control information is program or channel pause information, the program or channel information is the program uploaded by the uploader in real time that is played by the user terminal, and the identification information of the play control processing entity is an identity of the user terminal. In addition, the request further carries an indication of a program under play control, that is, the RTSP server address.

In step 504, the user terminal pauses the playing of the program according to the received play control request information.

After the user terminal that is playing the program, uploaded by the uploader in real time, receives the play control request information sent by the COV AS, the COV AS actively performs play control processing on the program played by the user terminal. The user terminal sends a play pause request to the RTSP server, and the RTSP server pauses the transfer of the media stream to the user terminal after receiving the request.

In addition, when the uploader recovers the uploading of the media stream, the uploader sends an upload recovery request to the COV AS. Then, the COV AS sends play control request information to the user terminal. After the user terminal receives the play control request information, the COV AS actively performs play control processing on the program played by the user terminal. Finally, the transfer of the media stream is recovered, and the user continues viewing the program on the terminal.

In this embodiment, when the user terminal plays a program, uploaded by the uploader in real time, if the uploader pauses the uploading, the network entity actively pauses the playing of the uploaded content by the user terminal. In this way, the real-time control by the network entity over programs played by other user terminals is realized.

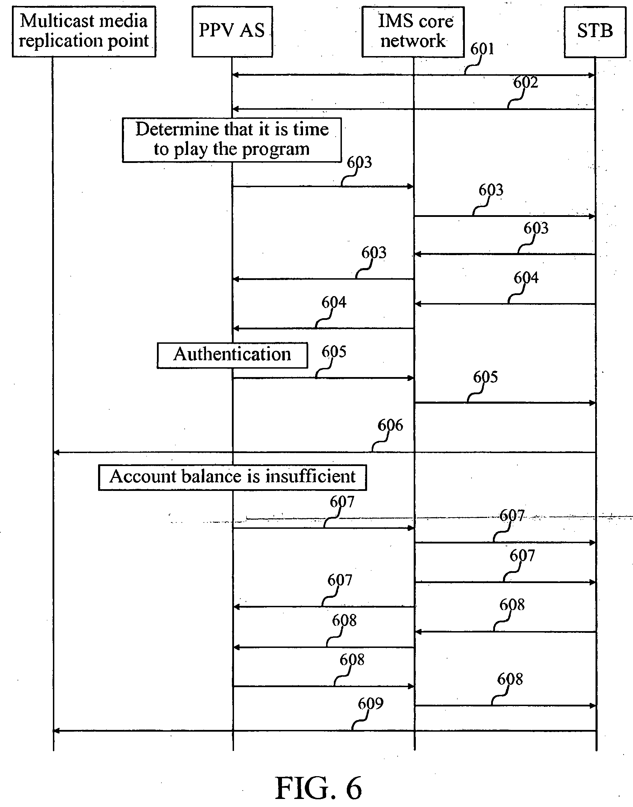

FIG. 6 is a signaling diagram of a play control method according to a sixth embodiment not part of the present invention. As shown in FIG. 6, the specific application scenario of this embodiment is as follows: A user is currently viewing another program, ordered PPV begins to play, a network automatically switches the user to view the PPV program, and during the viewing of the user, a PPV AS actively terminates the viewing of the user when finding that an account balance of the user is insufficient, where the PPV program is a media stream delivered in a multicast mode. The method specifically includes the following steps.

In step 601, the user orders a PPV program, which may be performed through the HTTP or SIP, or at a business hall or through a call.

In step 602, the user sets to automatically join himself/herself in viewing of the program when it is time for the ordered PPV program, which may be performed through the HTTP or SIP, or performed while ordering the PPV program at the business hall or through the call. The setting operation may also be performed through a network by default, and in this case this step is not needed.

In step 603, the PPV AS sends a Refer request to invite the user to join the viewing of the ordered PPV program when determining that it is time to play the program, and the user receives the Refer request, and returns a response 200OK.
Refer: stb@iptv.com
Refer-to: < Sip:PPV1@iptv.com;method=invite>

In step 604, the user sends a program request Invite that carries an identification of the PPV program to the PPV AS.

In step 605, the PPV AS authenticates the user, and after the authentication is successful, returns 200OK that carries a multicast address of the PPV program.

In step 606, an STB joins a multicast group according to the multicast address corresponding to the PPV program that is carried in 200OK, and acquires a media stream of the PPV program from a multicast replication point.

In step 607, during the viewing of the user, the PPV AS detects an account of the user in real time, and sends a Refer request to indicate that the user is requested to exit the viewing of the PPV program when finding that an account balance of the user is insufficient, and the user receives the Refer request and returns a 200OK response.
Refer stb@iptv.com
Refer-to: < Sip:PPV1@iptv.com;method=bye>

In step 608, the user sends a program viewing exit request Bye to the PPV AS, and the PPV AS receives the request Bye, and returns a 200OK response.

In step 609, the user leaves the multicast group of the PPV program.

When the PPV program is a media stream provided in a unicast mode, the specific process is similar to that in the multicast mode described above, and the difference lies in that, an Invite request sent by the STB is routed to an MF providing the PPV program media stream, and a media channel is established between the MF and the STB to transmit the PPV program media stream.

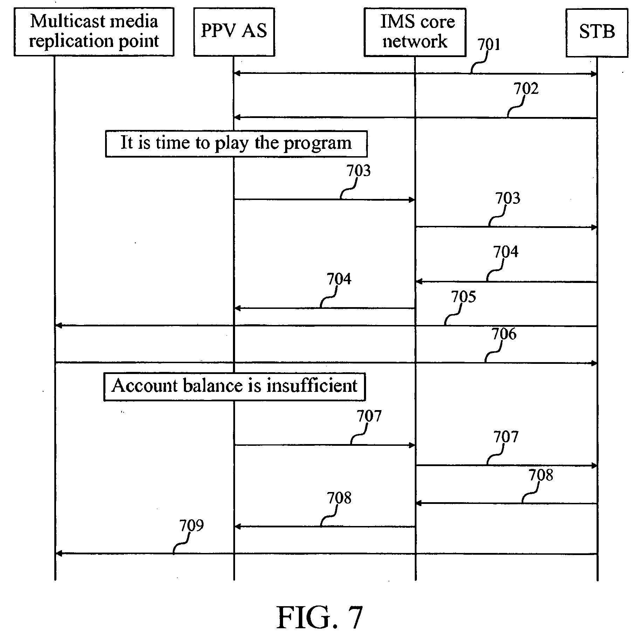

FIG. 7 is a signaling diagram of a play control method according to a seventh embodiment not part of the present invention. As shown in FIG. 7, the specific application scenario of this embodiment is as follows: A user is currently viewing another program, ordered PPV begins to play, a network automatically switches the user to view the PPV program, and during the viewing of the user, a PPV AS actively terminates the viewing of the user when finding that an account balance of the user is insufficient, where the PPV program is a media stream delivered in a multicast mode. The method specifically includes the following steps.

In step 701, the user orders a PPV program.

In step 702, the user sets to automatically join himself/herself in viewing of the program when it is time for the ordered PPV program.

In step 703, the PPV AS sends an Invite request to invite the user to join the viewing of the ordered PPV program when determining that it is time to play the program, where the request carries SDP offer information of the PPV program, and meanwhile an indication of the program to be joined - a multicast address of the PPV program is carried in a header field (for example, From) or a message body of the request, and an indication of a third party play control processing entity - an identity of the STB is carried in request-URI, and the Invite request is sent to the STB through an IMS core.

In step 704, the STB receives the program join request, and returns 200OK to the PPV AS through the IMS core.

In step 705, the STB joins a multicast group according to the multicast address corresponding to the PPV program that is carried in the Invite request.

In step 706, a media stream of the PPV program is acquired from a multicast replication point.

In step 707, during the viewing of the user, the PPV AS detects an account of the user in real time, and when finding that an account balance of the user is insufficient, the PPV AS actively terminates the user's viewing of the PPV program, sends a Bye request that carries the indication of the third party play control processing entity - the identity of the STB, and the Bye request is sent to the STB through the IMS core.

In step 708, the STB receives the Bye request, and returns 200OK to the PPV AS through the IMS core.

In step 709, the STB leaves the multicast group of the PPV program.

When the ordered PPV program is a media stream provided in a unicast mode, the specific process is similar to that in the multicast mode described above, and the difference lies in that, before transferring the media stream of the PPV program, the process includes the following steps: The PPV AS serves as a controller of 3PCC, and an MF providing the PPV program media stream and the STB respectively serve as one party in 3PCC, the PPV AS controls the establishment of a media channel between the MF and the STB, the STB receives the PPV program media stream from the MF, and subsequently, the PPV AS disconnects the media channel between the MF and the STB through third party control. For example, the PPV AS initiates an Invite request to the STB, where Request-URI is the identity of the STB, and the request does not carry SDP information. The STB receives the Invite request, and returns a response. If the STB knows media coding and decoding information of the PPV program, the response carries SDP information. Then, the PPV AS sends an Invite request to the MF, where the request carries the SDP information returned by the STB, and Request-URI is an identification of the PPV program. The MF receives the Invite request, and returns a response, so as to establish the media channel between the MF and the STB to begin the transfer of the media stream.

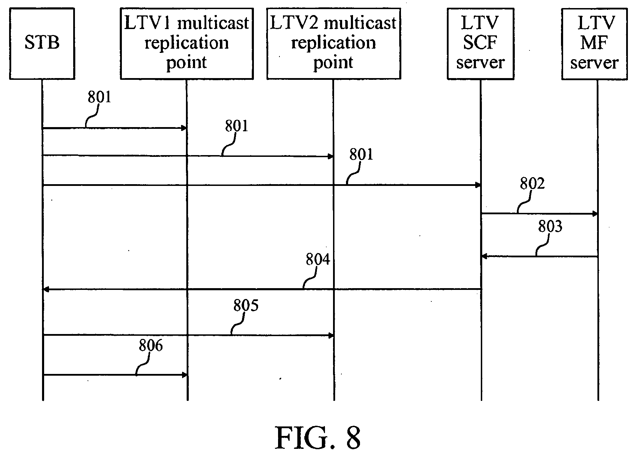

FIG. 8 is a signaling diagram of a play control method according to an eighth embodiment not part of the present invention. As shown in FIG. 8, the specific application scenario of this embodiment is as follows: When a currently viewed channel LTV1 begins to play an advertisement, a user switches to channel LTV2, and after the advertisement of the LTV1 finishes playing, a network controls the user to automatically switch to the original LTV1, where the LTVand the LTV2 are in the same service packet. The method specifically includes the following steps.

In step 801, if an LTV1 channel currently viewed by the user begins to play an advertisement that the user dislikes, switching to an LTV2 channel is performed, the user first leaves the currently viewed LTV1 channel, and then joins the LTV2 channel, and meanwhile sends a request to an LTV SCF controlling the LTV1 channel and sets to rejoin the user in the LTV1 channel after the advertisement being played on the LTV1 channel finishes. For example, the user may perform the above setting operation by clicking a fixed button.

In step 802, the LTV SCF receives the setting information of the user, and requests an LTV1 MF to notify the LTV SCF after the currently played advertisement ends.

In step 803, the LTV1 MF determines that the currently played advertisement ends, and notifies the LTV SCF.

In step 804, the LTV SCF sends a third party play control request, that is, sends a Refer request to an STB, where the request indicates that the STB is requested to rejoin the LTV1 channel, and carries a channel identification of the LTV1 and an identity of the STB.
Refer Sip:stb@iptv.com SIP/2.0
Refer-to:<Sip:LTV1@iptv.com;method=invite>

In step 805, after receiving the Refer request, the STB leaves a multicast group of the LTV2 channel.

In step 806, the STB searches for a multicast address of the LTV1 channel from stored information, and joins the multicast address of the channel.

In step 804 of the above embodiment, the LTV SCF may also carry the multicast address of the LTV1 in Refer-to, where method=join, and in this case, in step 805, the STB directly leaves the multicast group of the LTV2, and joins a multicast group of the LTV1.

This embodiment is also applicable to a parental control scenario, where after an LTV channel is switched, a child terminal reports the event to the LTV SCF using an SIP info message, and the LTV SCF determines that the parent is remotely checking a program being viewed by the child and controls the patent to also perform channel switching.

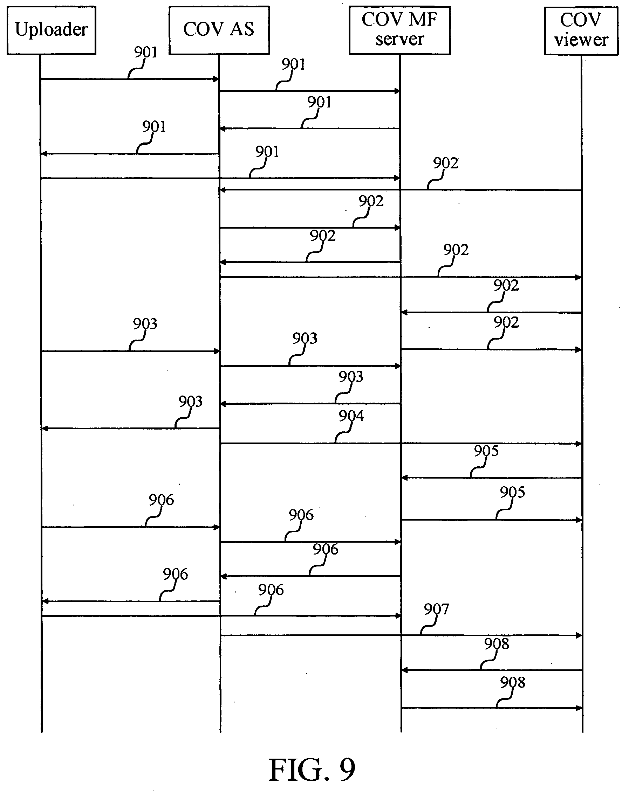

FIG. 9 is a signaling diagram of a play control method according to a ninth embodiment not part of the present invention. As shown in FIG. 9, the specific application scenario of this embodiment is as follows: In the COV service, an uploader uploads real-time content to a network, and when the uploaders pauses the uploading, a viewer that is viewing the real-time content also pauses the viewing. The method specifically includes the following steps.

In step 901, a COV uploader initiates an upload request Invite that carries media channel information "sendonly" to a COV AS, the COV AS authenticates the COV uploader, and after the authentication is successful, returns 200OK to the COV uploader, and receives the upload request, and the uploader begins to upload a media stream in real time, where an uploader of an established media channel is a=sendonly.

In step 902, a COV viewer initiates a viewing request Invite to the COV AS, the COV AS accepts the viewing request Invite, and returns 200OK that carries an address of an RTSP server providing the media stream to the viewer; the viewer initiates a play request to the RTSP server, and after receiving the play request, the RTSP server returns a response 200OK to the viewer, and begins to receive the media stream.

In step 903, the uploader pauses the uploading of the media stream, and sends a pause request Reinvite with a=inactive to the COV AS, and after receiving the pause request Reinvite, the COV AS returns a response 200OK to the uploader.

In step 904, the COV AS sends a Refer request to the viewer, where the request carries third party play control - an indication of a VCR operation (pause) on a program, a third party play control processing entity - an identity of the viewer, and an indication of a program under third party play control - the RTSP server address.

Step 905, after receiving the Refer request, the viewer performs third party play control processing, and sends an RTSP pause request to the RTSP server to request a pause of the media stream transfer.

In step 906, the uploader recovers the uploading of the media stream, and sends an upload recovery request Reinvite with a=sendonly to the COV AS, and after receiving the upload recovery request Reinvite, the COV AS returns a response 200OK to the uploader.

In step 907, the COV AS sends a Refer request to the viewer again, where the request carries third party play control - an indication of a VCR operation (play) on the program, the third party play control processing entity - the identity of the viewer, and the indication of the program under third party play control - the RTSP server address.

In step 908, after receiving the Refer request, the viewer performs third party play control processing, and sends an RTSP play request to the RTSP server to request the transfer of the media stream.

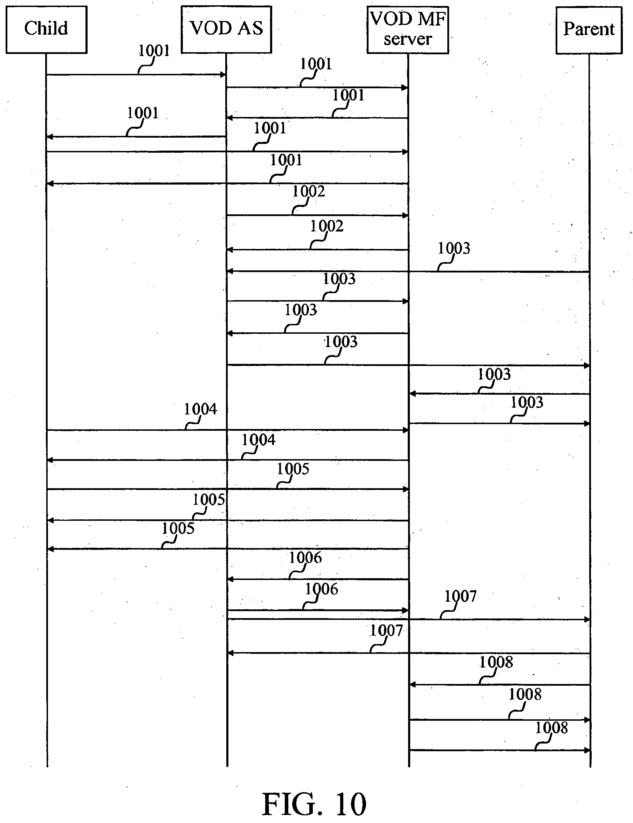

FIG. 10 is a signaling diagram of a play control method according to a tenth embodiment not part of the present invention. As shown in FIG. 10, the specific application scenario of this embodiment is as follows: Under the control of a parent, a child is viewing an authorized VOD program, and when the viewing of the child lasts for 10 minutes, and meanwhile, the parent remotely checks on a terminal of the parent program content being viewed by the child, the child fast-forwards the VOD program, and content on the screen of the parent is also fast-forwarded. The method specifically includes the following steps.

In step 1001, the child begins to view an authorized VOD program. The authorization process is as follows: The child sends a join request Invite with a=recvonly to a VOD AS; after receiving the join request, a COV AS authenticates the child user, and after the authentication is successful, returns to the child a response 200OK that carries an address of an RTSP server providing a VOD program media stream; the child initiates an RTSP play command to the RTSP server; and the RTSP server sends the VOD program media stream to the child.

In step 1002, the VOD AS subscribes to a VCR operation of the child, for example, Subscribe child@IPTV.com, Event=VCR.

In step 1003, the parent obtains a program currently being viewed by the child, for example, the parent subscribes to and obtains the program being viewed by the child through a Presence service, joins the program being viewed by the child, and views from the current viewing position of the child, where Request-URI of an Invite request is a VOD program identification, and a parental control parameter PC= child@IPTV.com is carried, which means that the parent requests playing to himself/herself from the current position of the current program being viewed by the child. An MF searches itself and obtains the position of the VOD program being viewed by the child@IPTV.com, and returns npt=10- to the parent through 200OK, and the parent initiates an RTSP play command that carries a playing position parameter npt=10-.

In step 1004, the child performs a fast forward operation to fast-forward from the current position to a position of 20s, and a child terminal carries a playing position parameter npt=now-20 by sending an RTSP play command to the RTSP server.

In step 1005, a VOD MF begins to normally send a media stream to the child terminal from the position of 20s, and the child terminal carries a playing position parameter npt=now- by sending an RTSP play command to the RTSP server.

In step 1006, the VOD MF reports the fast forward operation of the child and the fast forward end position of 20s to the VOD AS through Notify.

In step 1007, after receiving the reported VCR operation of the child, the VOD AS identifies that the parent is remotely checking the content being viewed by the child, sends a Reinvite request to the parent, and carries a playing start position npt=20- in an SDP media line.

In step 1008, after receiving the Reinvite request, the parent terminal sends through an RTSP control channel an RTSP play command that indicates beginning to send the media stream from the position of 20s.

The above embodiment is also applicable to a fast rewind operation. For a pause operation, in Reinvite, the parent terminal is changed from a=recvonly to a=inactive, the parent terminal receives a Reinvite request, and sends an RTSP pause command to pause the acceptance of the media stream.

In this embodiment, the method for the parent to remotely check on the terminal of the parent the program content being viewed by the child is not limited to the method in this embodiment, and a method for the child to perform a VCR operation to control the content on the screen of the parent is also applicable to other establishment methods.

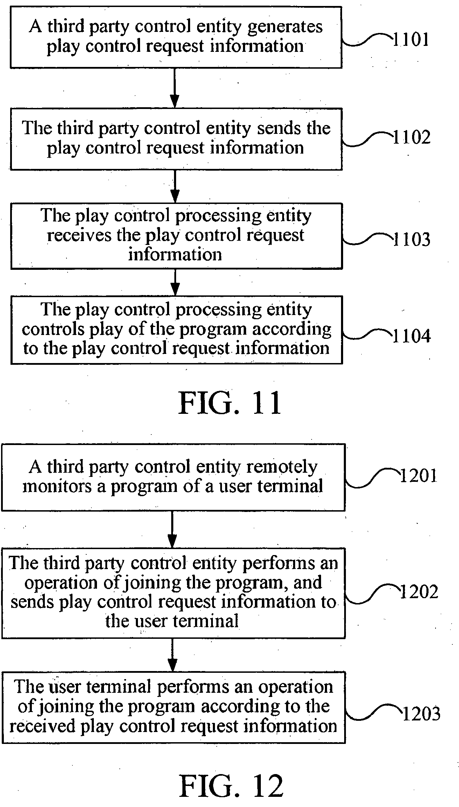

FIG. 11 is a flow chart of a play control method according to an eleventh embodiment not part of the present invention. As shown in FIG. 11, this embodiment provides a play control method, which includes the following steps.

In step 1101, a third party control entity generates play control request information, where the play control request information includes program control indication information and identification information of a play control processing entity.

Specifically, the third party control entity may be a user entity such as an STB or an MS. The generated play control request information includes program or channel control indication information and identification information of a play control processing entity. Specifically, the program or channel control indication information is for indicating specific content of the play control request, for example, indicate that the content of the request is requesting a user to join a channel 1, or requesting a user to leave the channel 1, or requesting a user to perform a fast forward, fast rewind, or pause operation on the channel 1; the identification information of the play control processing entity is for indicating the play control processing entity processing the above specific operation.

In step 1102, the third party control entity sends the play control request information according to the identification information of the play control processing entity.

The third party control entity sends the play control request information to the play control processing entity according to the identification information of the play control processing entity. Before the third party control entity generates the play control request information, the method further includes: synchronizing content played by a user terminal and the play control processing entity. For example, in a parental control scenario, a parent subscribes to and obtains a program being viewed by a child through a Presence service, joins the program being viewed by the child by carrying in a request a program identification of the program being viewed by the child as well as a parental control parameter, and begins to view from a current viewing position of the child. After the content played by the user terminal and the content played by the play control processing entity are synchronized, the user terminal, according to identification information of the play control processing entity, receives a trigger request sent by a user or sends the play control request information according to a trigger strategy set by the user. The trigger request sent by the user may be a play control trigger request sent by the user by operating a remote control. For example, in the parental control scenario, the parent views a program being viewed by the child in real time, and when finding that the program content is not suitable for viewing by the child, the parent operates the remote control to fast-forward or switch the program. The trigger strategy set by the user may be a certain trigger strategy set by the user for controlling a program played by the play control processing entity. For example, the parent sets on a terminal of the parent to automatically switch to other programs for viewing when the child views a program of CCTV-6, so as to realize play control without any operation of the parent through the remote control.

In step 1103, the play control processing entity receives the play control request information.

The play control processing entity receives the play control request information sent by the third party control entity, parses the play control request information, and acquires program or channel control indication information. The acquired program or channel control indication information includes program or channel control information, and may further include program or channel information. It should be noted that, if the acquired program or channel control indication information does not include the program or channel information, the program or channel information is by default a current program or channel being played by the user terminal.

The program or channel control information may be program or channel join information, for example, SIP invite, refer method=invite, refer method=join, or the like; or a program or channel leave indication, for example, SIP Bye, refer method=bye, refer method=leave, or the like; or program or channel operation information, that is, a processing identification carried in the request when a pause/fast forward/fast rewind operation is performed on the current program or channel, for example, SIP invite a=inactive, RTSP play Scale:-3, range:npt=now-30, RTSP pause, SIP info, refer method=play, refer method=pause, or the like. The program or channel operation information is specifically program or channel fast forward, fast rewind, or pause information.

Specifically, when the program or channel control information carried in the play control request information is a program or channel join indication, the control of play according to the program or channel control indication information specifically includes: joining the program or channel according to the control information of the program or channel join information and the program or channel information by the user terminal. The user terminal may leave a currently viewed program or channel, and join the program or channel indicated in the program or channel information, or directly join the program or channel indicated in the program or channel information to acquire a media stream for viewing. When the program or channel control information carried in the play control request information is a program or channel leave indication, the control of play according to the program or channel control indication information by the user terminal specifically includes: leaving the program or channel according to the control information of the program or channel leave information and the program or channel information by the user terminal, that is, leaving the program or channel indicated in the program or channel information or a currently viewed channel by the user terminal. When the program or channel control information carried in the play control request information is program or channel operation information, the third party control entity performs a fast forward, fast rewind, or pause operation on the program or channel indicated in the program or channel information or a current program or channel of the user terminal.

In step 1104, the play control processing entity controls play of the program or channel according to the program or channel control indication information.

Play of a program or channel currently played by the user terminal is controlled according to the program or channel control information and program or channel information carried in the program or channel control indication information introduced in step 1103. If the program or channel control information carried in the play control request information is a program or channel join indication, the information of the program or channel to be controlled is a channel 1, and the identification information of the play control processing entity is an IMS public identity of a user terminal 1, the third party control entity actively joins the user terminal 1 in the viewing of the channel 1; if the program or channel control information carried in the play control request information is a program or channel leave indication, the information of the program or channel to be controlled is a channel 2, and the identification information of the play control processing entity is an IMS public identity of a user terminal 2, the third party control entity actively causes the user terminal 2 to leave the viewing of the channel 2; and if the program or channel control information carried in the play control request information is a program or channel fast forward indication, the information of the program or channel to be controlled is a channel 3, and the identification information of the play control processing entity is an 1MS public identity of a user terminal 3, the third party control entity actively performs a fast forward operation on the channel 3 of the user terminal 3.

This embodiment provides a play control method, where a third party control entity sends play control request information, and a user terminal performs a corresponding play control operation on a program or channel according to program or channel control indication information in the request information. In this way, control by the third party control entity over the program or channel of the user terminal is realized.

During the specific implementation, the third party control entity actively joins the user terminal in a program or channel in many cases, for example, in a parental remote control scenario, if a parent wishes a child to view a children channel, the parent switches a program of a child terminal monitored by a terminal of the parent to the children channel, and the child terminal automatically joins the playing of the children channel under the control of the parent terminal. The third party control entity actively makes the user terminal leave a program or channel in many cases, for example, in the parental remote control scenario, if the parent wishes the child to go to bed at 8 p.m., the parent exits the program of the child terminal monitored by the terminal of the parent, and the child terminal automatically exits the current program under the control of the parent terminal. The third party control entity also actively performs a pause/fast forward/fast rewind operation on a program of the user terminal in many cases, for example, in the parental remote control scenario, the child is viewing an authorized program, and meanwhile, the parent remotely checks on the terminal of the parent the program content being viewed by the child, if the child terminal fast-forwards the program when the playing lasts for 10 minutes, the content on the screen of the parent terminal is also fast-forwarded accordingly; in the parental remote control scenario, the parent remotely cheeks a program being viewed by the child, and when finding that the program content being played by the child terminal is not suitable for viewing by the child, the parent terminal fast-forwards the program, and the program played by the child terminal is also fast-forwarded accordingly. The play control in several typical application scenarios will be explained as follows with reference to some typical embodiments.

FIG. 12 is a flow chart of a play control method according to a twelfth embodiment of the present invention. In this embodiment, the application scenario is a parental remote monitoring scenario, where a parent remotely monitors a program being viewed by a child, and when wishing the child to view a children channel, the parent joins the viewing of the children channel on a terminal of the parent, and then the child terminal automatically joins the children channel under the control of the parent terminal. Program or channel control information sent by a third party user terminal that is obtained by parsing is specifically program or channel join information, program or channel information is specifically the children channel, and identification information of a play control processing entity is specifically an identity of an STB of the child terminal, that is, the play control processing entity in this embodiment is specifically the child terminal. As shown in FIG. 12, the specific implementation process of the play control method in this embodiment is as follows.

In step 1201, a third party control entity remotely monitors a program or channel of a user terminal.

For example, in this embodiment, the program or channel of the user terminal is viewed by a child, and the third party control entity is controlled by a parent of the child. Before the user terminal plays the program on the terminal, the method further includes passing the program authorization of a server by the user terminal. The specific authorization process is as follows: The user terminal sends a program authorization request to the server; after receiving the program authorization request, the server returns to the user terminal a response 200OK that carries a grant identification of the program authorization request and provides an address of an RTSP server sending a media stream of the program; after receiving the grant identification, the user terminal sends a viewing request to the RTSP server of the program; the RTSP server receives the viewing request, and begins to send the streaming media to the user terminal; and the user terminal begins to view the authorized program.

Before the third party control entity remotely monitors the program played by the user terminal, the method includes: requesting joining the program or channel of the user terminal by the third party control entity, where the third party control entity may obtain the program or channel of the user terminal through a Presence service. The specific joining process may employ the process introduced in the second embodiment. The third party control entity sends a subscription request for obtaining the program or channel of the user terminal to the server, where the request carries a program identification and a parental control parameter; the server searches itself to obtain the position of the program or channel of the user terminal according to the received subscription request, returns a response 200OK to the third party control entity carries the program identification and a program playing position identification in 200OK, and provides the address of the RTSP server sending the media stream of the program; after receiving the response, the third party control entity sends a join request that carries the program identification and the program playing position identification to the RTSP server of the program or channel; the RTSP server receives the join request, and begins to send the streaming media to the third party control entity according to the program identification and the program playing position identification carried in the request; and the third party control entity joins the program or channel of the user terminal, and begins to view from the playing position of the user terminal.

In step 1202, the third party control entity performs an operation of joining the program or channel, and sends play control request information to the user terminal.

If the third party control entity wishes a user to view a children channel when remotely monitoring the program or channel of the user terminal, the third party control entity performs the operation of joining the children channel actively, for example, the parent controls the third party control entity to join the children channel by pressing a button on a remote control. Meanwhile, the third party control entity sends play control request information to the user terminal. The request information carries program or channel control information, program or channel information, and identification information of a play control processing entity. Specifically, the program or channel control information is program or channel join information, the program or channel information is the children channel, and the identification information of the play control processing entity is an identity of the user terminal.

In step 1203, the user terminal performs an operation of accessing the program or channel according to the received play control request information.

After receiving the sent play control request information, the user terminal leaves a multicast group of the currently viewed program and joins a multicast group of a program of the children channel according to the program or channel control information, the program or channel information, and the identification information of the play control processing entity carried in the request information.

It should be noted that, in this embodiment, the method for the third party control entity to remotely check program content of the user terminal is not limited to the method in this embodiment.

In this embodiment, the third party control entity performs the operation of joining a program or channel, so that the user terminal automatically performs the same operation of joining the program or channel under the control of the third party control entity. In this way, the purpose that a third party user remotely switches a channel for a user is realized, and control by the third party user over the playing of the program viewed by the user is realized.

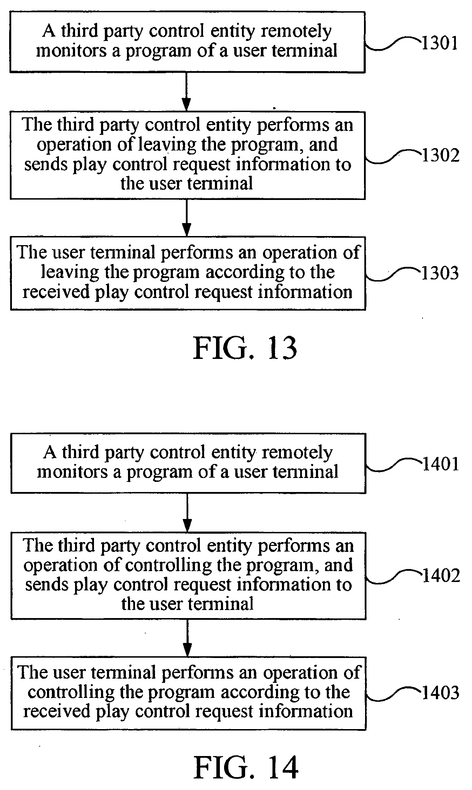

FIG. 13 is a flow chart of a play control method according to a thirteenth embodiment of the present invention. In this embodiment, the application scenario is a parental remote monitoring scenario, where a parent remotely monitors a program being viewed by a child, and if the parent wishes the child to go to bed at 8 p.m., the child terminal automatically leaves the viewing of the current program under the control of a parent terminal. Program or channel control information sent by a user that is obtained by parsing is specifically program or channel leave information, program or channel information is specifically a current program channel, and identification information of a play control processing entity is specifically an identity of an STB of the child terminal, that is, the play control processing entity in this embodiment is specifically the child terminal. As shown in FIG. 13, the specific implementation process of the play control method in this embodiment is as follows.

In step 1301, a third party control entity remotely monitors a program or channel of a user terminal.

For example, in this embodiment, the program or channel of the user terminal is viewed by a child, and the third party control entity is controlled by a parent of the child. Before the third party control entity remotely controls the program of the user terminal, the third party control entity requests joining the program of the user terminal. The third party control entity sends a subscription request for obtaining the program of the user terminal to a sever, where the request carries a program identification and a parental control parameter; the server searches itself to obtain a position of the program of the user terminal according to the received subscription request, returns a response 200OK to the third party control entity, carries the program identification and a program playing position identification in 200OK, and provides an address of an RTSP server sending a media stream of the program; after receiving the response, the third party control entity sends a join request that carries the program identification and the program playing position identification to the RTSP server of the program; the RTSP server receives the join request, and begins to send the streaming media to the third party control entity according to the program identification and the program playing position identification carried in the request; and the third party control entity joins the program of the user terminal, and begins to view from the playing position of the user terminal.

In step 1302, the third party control entity performs an operation of leaving the program or channel, and sends a play control request to the user terminal.

If the third party control entity wishes the user to go to bed at 8 p.m. during the remote monitoring of the user terminal, the third party control entity actively leaves a currently played program or channel, for example, the parent controls a terminal to leave by pressing a button on a remote control. Meanwhile, the third party control entity sends play control request information to the user terminal. The request information carries program or channel control information, program or channel information, and identification information of a play control processing entity. Specifically, the program or channel control information is program or channel leave information, the program or channel information is the current channel, and the identification information of the play control processing entity is an identity of the user terminal.

In step 1303, the user terminal performs an operation of leaving the program or channel according to the received play control request information.

After receiving the play control request information sent by the third party control entity, the user terminal leaves a multicast group of a currently viewed program according to the program or channel control information and the program or channel information carried in the request information.

In this embodiment, a third party user performs the operation of leaving a program or channel on a terminal of the third party, so that a user terminal automatically performs the same operation of leaving the program or channel under the control of a third party control entity. In this way, the purpose that the third party control entity actively causes the user terminal to remotely exit the viewing of the program or channel is realized, and control buy the third party user over the playing of a program or channel of the user is realized.

FIG. 14 is a flow chart of a play control method according to a fourteenth embodiment of the present invention. In this embodiment, the application scenario is a parental remote monitoring scenario, where a parent remotely monitors a program being viewed by a child, and when finding that the program being viewed by the child is not suitable for viewing by the child, the parent performs a fast forward or fast rewind operation on a terminal of the parent, and a child terminal automatically performs the fast forward or fast rewind operation under the control of the parent. Program or channel control information sent by a user that is obtained by parsing is specifically program or channel operation information, program or channel information is specifically a current program, and identification information of a play control processing entity is specifically an identity of an STB of the child terminal, that is, the play control processing entity in this embodiment is specifically the child terminal. As shown in FIG. 14, the specific implementation process of the play control method in this embodiment is as follows.

In step 1401, a third party control entity remotely monitors a program or channel of a user terminal.

For example, in this embodiment, a program or channel played by the user terminal is viewed by a child, and the third party control entity is controlled by a parent of the child. Before the third party control entity remotely monitors the program played by the user terminal, the third party control entity requests joining the program being viewed by the child. The specific joining process may employ the process introduced in the second embodiment. The third party control entity joins remote monitoring of the program of the user terminal, and the parent can view on the terminal of the parent program content of the user terminal in real time, starting from the playing position of the user terminal. After the third party control entity remotely monitors the user terminal, the method further includes subscribing to a fast forward, fast rewind, or pause operation of the third party control entity by a server.

In step 1402, the third party control entity performs an operation of controlling the program or channel, and sends play control request information to the user terminal.

During the remote monitoring of the third party control entity on the program of the user terminal, when the parent finds that program content being viewed by the child is not suitable for viewing by the child, the third party control entity performs a fast forward operation on the monitored program of the user terminal, and meanwhile sends play control request information to the user terminal to indicate that the user terminal is requested to also fast-forward the current program.

In step 1403, the user terminal performs an operation of controlling the program or channel according to the received play control request information.

The user terminal sends a fast forward request to the server according to the received play control request information, and after receiving the fast forward request, the server performs the same fast forward operation on the program of the user terminal as the third party control entity. If the third party control entity considers that a current program is suitable for viewing by the user after fast-forwarding the program to a certain position, the third party control entity sends a play request to indicate stop of the fast forward operation and normal play of the program. After stopping the fast forward operation, the third party control entity sends play control request information to the user terminal again to indicate that the user terminal is requested to also stop the fast forward operation, the user terminal sends a play request to the server according to the received play control request information that is sent again, and after receiving the play request, the server performs the same play operation on the program of the user terminal as the third party control entity.

It should be noted that, this embodiment is also applicable to a fast rewind operation or pause operation performed by the third party control entity on a program of the user terminal in the remote monitoring scenario, and the specific process is similar to that in this embodiment.

In this embodiment, a third party control entity performs a fast forward, fast rewind, or pause operation on a program or channel of a user terminal, so that the third party control entity controls program content played by the user terminal in real time. In this way, real-time remote control by the third party control entity over the user terminal is realized, and control by a third party user over the playing of a program of a user is further realized.

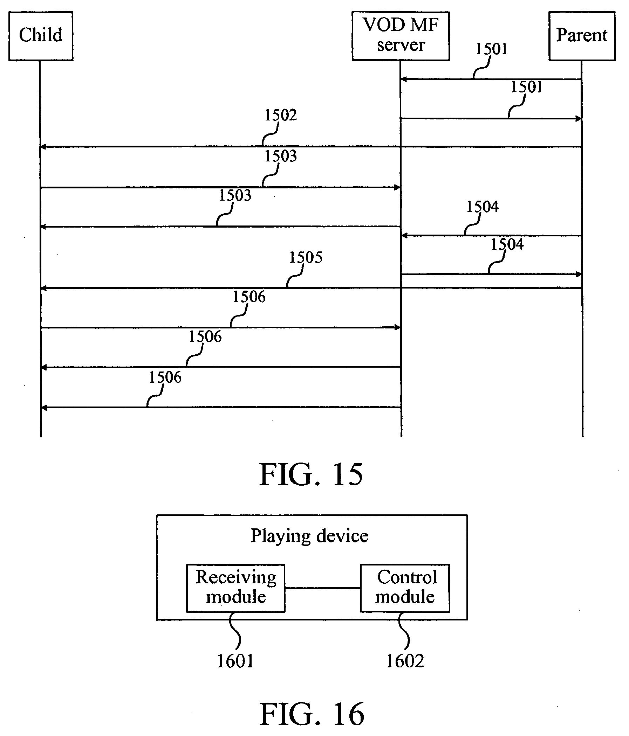

FIG 15 is a signaling diagram of a play control method according to a fifteenth embodiment of the present invention. As shown in FIG 15, this embodiment provides a play control method applied in a specific scenario. The specific application scenario is as follows: In a parental control scenario, the parent remotely checks a program being viewed by a child, and when finding that the program content being viewed by the child is not suitable for viewing by the child, the parent remotely operates a child terminal to fast-forward the current program. The method specifically includes the following steps.

In step 1501, if the parent finds that a current program is not suitable for viewing by the child, the parent fast-forwards the program on a VCR operation interface for remotely checking a program viewed by the child on a terminal of the parent, and controls the content viewed by himself/herself to be fast-forwarded.

In step 1502, while performing the fast forward operation, the parent sends a Refer message to the child terminal to instruct the child terminal to also fast-forward the current program.
Refer: child@iptv.com
Refer-to: <RTSP://vod/vodmfl ;method=paly,scale=3>

In step 1503, the child terminal sends a fast forward request to an RTSP server according to the received Refer request, and after receiving the fast forward request, the RTSP server returns a response 200OK, instructs the child terminal to perform the corresponding RTSP fast forward operation.

In step 1504, if the parent thinks that the program is suitable for viewing by the child after fast-forwarding the program to a certain position, the parent stops the fast forward operation, and normally plays the program.

In step 1505, after stopping the fast forward operation, the parent sends a Refer message to the child terminal to instruct the child terminal to also stop the fast forward operation.
Refer: child@iptv.com
Refer-to: <RTSP://vod/vodmfl;method=paly,scale=1>

In step 1506, the child terminal performs the corresponding RTSP operation according to the received Refer request.

This embodiment is also applicable to the remote control by the parent over the child by performing a VCR operation such as program switching, fast rewind, or pause.

Further, in a VCR operation of a VOD program performed by a child in the above fourteenth embodiment, the Refer method in this solution may also be utilized to realize control of the remote monitoring of the parent.

FIG. 16 is a structural view of a playing device according to an embodiment of the present invention. As shown in FIG. 16, the playing device provided in this embodiment includes a receiving module 1601 and a control module 1602. The receiving module 1601 is configured to receive play control request information sent by a third party control entity, where the play control request information includes program or channel control indication information; and the control module 1602 is configured to control play according to the program or channel control indication information included in the play control request information that is received by the receiving module 1601.

The program or channel control indication information specifically includes program or channel control information for indicating specific content of the play control request, for example, joining a program or channel or leaving a program or channel; and the program or channel control indication information may further include program or channel information for indicating a program or channel under play control, for example, an LTV channel identification, a VOD program identification, a multicast address, or the like. For details, reference can be made to the illustration of the method embodiments.

The control module 1602 controls play according to the program or channel control indication information received by the receiving module 1601. The program or channel control indication information includes program or channel control information, and may further include program or channel information, and the control module 1602 controls play according to the program or channel control information and/or the program or channel information. Specifically, when the program or channel control information carried in the play control request information is a program or channel join indication, the control of play according to the program or channel control indication information specifically includes: joining the program or channel according to the control information of the program or channel join information and the program or channel information by the user. The user may leave a currently viewed program or channel, and join the program or channel indicated in the program or channel information, or directly join the program or channel indicated in the program or channel information to acquire a media stream for viewing. When the program or channel control information carried in the play control request information is a program or channel leave indication, the control of play according to the program or channel control indication information specifically includes: leaving the program or channel according to the control information of the program or channel leave information and the program or channel information, that is, leaving the program or channel indicated in the program or channel information or a currently viewed channel by the user. When the program or channel control information carried in the play control request information is program or channel operation information, the user performs a fast forward, fast rewind, or pause operation on the program or channel indicated in the program or channel information or a currently viewed program or channel.

Specifically, the playing device provided in this embodiment may be an entity such as an STB or an MS.

This embodiment provides a play control device, which uses the control module to control a program or channel of a user according to program or channel control indication information received by the receiving module. In this way, control by a network entity or a third party control entity over the playing of programs or channels being viewed by other users is realized.

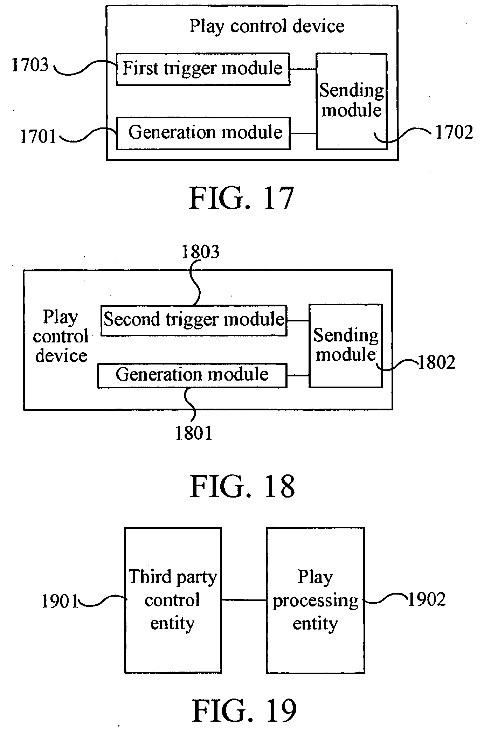

FIG. 17 is a structural view of a play control device according to a first embodiment of the present invention. As shown in FIG. 17, the play control device provided in this embodiment is a network entity, which specifically includes a generation module 1701 and a sending module 1702. The generation module 1701 is configured to generate play control request information, where the play control request information includes program or channel control indication information and identification information of a play control processing entity, the program or channel control indication information is for indicating that the play control processing entity is requested to control play, and the identification information of the play control processing entity is for indicating the play control processing entity; and the sending module 1702 is configured to send the play control request information according to the identification information of the play control processing entity.

The program or channel control indication information specifically includes program or channel control information for indicating specific content of the play control request, for example, joining a program or channel or leaving a program or channel; and the program or channel control indication information may further include program or channel information for indicating a program or channel under play control, for example, an LTV channel identification, a VOD program identification, a multicast address, or the like. For details, reference can be made to the illustration of the method embodiments.

In addition, the play control device may further include a first trigger module 1703 configured to instruct the sending module 1702 to send the play control request information when a preset trigger condition is met. The specific trigger condition refers to a specific time or event condition. When the time or event condition is met, the first trigger module 1703 instructs the sending module 1702 to send the play control request information.

Specifically, the play control device provided in this embodiment may be a network entity such as an AS, an SCF server, a media server, an RTSP server, or the like, or a terminal entity such as an STB or an MS.

FIG. 18 is a structural view of a play control device according to a second embodiment of the present invention. As shown in FIG. 18, this embodiment is based on the above embodiment, the play control device provided in this embodiment is a user terminal, and the play control device in this embodiment also includes a generation module 1801 and a sending module 1802. The generation module 1801 is configured to generate play control request information, where the play control request information includes program or channel control indication information and identification information of a play control processing entity; and the sending module 1802 is configured to send the play control request information according to the identification information of the play control processing entity.

The play control device provided in this embodiment further includes a second trigger module 1803 configured to notify the sending module 1802 to send the play control request information according to a received trigger request sent by a user or a trigger strategy preset by the user.

The trigger request sent by the user may be a play control trigger request sent by the user by operating a remote control. For example, in a parental control scenario, a parent views a program being viewed by a child in real time, and when finding that the program content is not suitable for viewing by the child, the parent operates the remote control to fast-forward or switch the program. The trigger strategy set by the user may be a certain trigger strategy set by the user for controlling a program played by the play control processing entity. For example, the parent sets on a terminal of the parent to automatically switch to other programs for viewing when the child views a program of CCTV-6, so as to realize play control without any operation of the parent through the remote control.

FIG. 19 is a structural view of a play control system according to an embodiment of the present invention. As shown in FIG. 19, the play control system provided in this embodiment includes a third party control entity 1901 and a play control processing entity 1902. The third party play control entity 1901 is configured to generate play control request information including program or channel control indication information and identification information of the play control processing entity 1902, and send the play control request information to the play control processing entity 1902, where the program or channel control indication information is for indicating that the play control processing entity 1902 is requested to control play, and the identification information of the play control processing entity 1902 is for indicating the play control processing entity 1902; and the play control processing entity 1902 is configured to receive the play control request information sent by the third party play control entity 1901, and control play according to the program or channel control indication information included in the play control request information.

Specifically, the program or channel control indication information includes program or channel control information, and may further include information of a program or channel to be controlled. For details, reference can be made to the illustration of the method embodiments.

Specifically, the third party play control entity 1901 may be a network entity such as an AS, an SCF server, a media server, an RTSP server, or the like, or a terminal entity such as an STB or an MS, and the play control processing entity 1902 may be an entity such as an STB or an MS.

An interface protocol between the third party play control entity 1901 and the play control processing entity 1902 includes an SIP, an HTTP, an RTSP, and a proprietary protocol.

Persons of ordinary skill in the art should understand that all or a part of the steps of the method according to the embodiments of the present invention may be implemented by a program instructing relevant hardware. The program may be stored in a computer readable storage medium. When the program is run, the steps of the method according to the embodiments of the present invention are performed. The storage medium may be any medium that is capable of storing program codes, such as a ROM, a RAM, a magnetic disk, and an optical disk.

It should be noted that the above embodiments are merely provided for elaborating the technical solutions of the present invention, but not intended to limit the present invention. Although the present invention has been described in detail with reference to the foregoing embodiments, it is apparent that person having ordinary skill in the art may make modifications to the technical solutions described in the above embodiments, or may make equivalent replacements to some of the technical features.

## Claims

1. A play control method, comprising:
passing, by a user terminal, a program authorization of a server;
playing, by the user terminal, a authorized program on the user terminal, where the authorized program is provided by a RTSP server;
receiving (1202), by the user terminal, a control request information from a third party control entity after the third party control entity remotely monitoring (1201) the authorized program played by the user terminal and the third party control entity requesting (1202) joining the authorized program played by the user terminal; and
performing (1203), by the user terminal, an operation of accessing a program according to the control request information.

2. The play control method according to claim 1, wherein, passing, by a user terminal, a program authorization of a server comprises:
the user terminal sending a program authorization request to the server;
the user terminal receiving a response 200OK from the server, wherein the response 200OK that carries a grant identification of the program authorization request and provides an address of an RTSP server sending a media stream of the program;
the user terminal sending a viewing request to the RTSP server of the program after receiving the grant identification;
the user terminal receiving streaming media of authorized program from the RTSP server after the RTSP server receiving the viewing request.

3. The play control method according to claim 1 or 2, wherein, performing, by the user terminal, an operation of accessing the program according to the control request information comprises:
the user terminal leaving a multicast group of a currently viewed program and joining a multicast group of a program of the children channel according to a program or channel control information, a program or channel information, and a identification information of the play control processing entity carried in the control request information.

4. A play control method, comprising:
monitoring, by a third party control entity, remotely a program played by a user terminal after the user terminal passes a program authorization of a server and the user terminal plays a authorized program on the user terminal, where the authorized program is provided by a RTSP server;
requesting, by the third party control entity, joining the authorized program played by the user terminal;
performing, by the third party control entity, an operation of joining the authorized program;
sending, by the third party control entity, a control request information to the user terminal for performing an operation of accessing a program according to the control request information.

5. The play control method according to claim 4, the requesting, by the third party control entity, joining the authorized program played by the user terminal comprises:
sending, by the third party control entity, a subscription request for obtaining the authorized program played by the user terminal to the server, where the request carries a program identification and a parental control parameter;
receiving, by the third party control entity, a response 200OK, from the server, after the server searches itself to obtain the position of the program or channel of the user terminal according to the received subscription request, where the response 200OK carries a program identification and a program playing position identification and provides an address of the RTSP server sending the media stream of the program;
sending, by the third party control entity, a join request that carries the program identification and the program playing position identification to the RTSP server of the program after receiving the 200OK response;
receiving, by the third party control entity, a streaming media from the RSTP server according to the program identification and the program playing position identification carried in the request;
joining, by the third party control entity, the authorized program played by the user terminal, and beginning to view from a playing position of the user terminal.

6. A system for play control, comprising:
a user terminal, adapted to pass a program authorization of a server, play a authorized program on the user terminal, where the authorized program is provided by a RTSP server, receive a control request information from a third party control entity and perform an operation of accessing a program according to the control request information;
the third party control entity, adapted to remotely monitor the authorized program played by the user terminal, request joining the authorized program played by the user terminal, then send the control request information to the user terminal.

7. The system according to the claim 6, wherein the user terminal is specifically adapted to: leave a multicast group of a currently viewed program and join a multicast group of a program of the children channel according to a program or channel control information, a program or channel information, and a identification information of the play control processing entity carried in the control request information.

8. The system according to the claim 6, wherein the third party control entity is specifically adapted to:
send a subscription request for obtaining the authorized program played by the user terminal to the server, where the request carries a program identification and a parental control parameter;
receive a response 200OK from the server, after the server searches itself to obtain the position of the program or channel of the user terminal according to the received subscription request, where the response 200OK carries a program identification and a program playing position identification and provides an address of the RTSP server sending the media stream of the program;
send a join request that carries the program identification and the program playing position identification to the RTSP server of the program after receiving the 200OK response;
receive a streaming media from the RSTP server according to the program identification and the program playing position identification carried in the request;
join the authorized program played by the user terminal, and beginning to view from a playing position of the user terminal.

## Patentansprüche

1. Abspielsteuerverfahren, das die folgenden Schritte aufweist:
Bestehen durch ein Benutzerendgerät einer Programmautorisierung eines Servers; Abspielen durch das Benutzerendgerät eines autorisierten Programms auf dem Benutzerendgerät, wobei das autorisierte Programm durch einen RTSP-Server bereitgestellt wird;
Empfangen (1202) durch das Benutzerendgerät von Steuerungsanforderungsinformationen von einer Steuerungsentität eines Dritten, nachdem die Steuerungsentität eines Dritten das durch das Benutzerendgerät abgespielte autorisierte Programm fernüberwacht (1201) und die Steuerungsentität eines Dritten anfordert (1202), sich dem durch das Benutzerendgerät abgespielten autorisierten Programm zuzuschalten; und
Durchführen (1203) durch das Benutzerendgerät einer Operation des Zugreifens auf ein Programm entsprechend den Steuerungsanforderungsinformationen.

2. Abspielsteuerverfahren nach Anspruch 1, wobei das Bestehen durch ein Benutzerendgerät einer Programmautorisierung eines Servers aufweist:
Senden einer Programmautorisierungsanforderung an den Server durch das Benutzerendgerät;
Empfangen einer Antwort 200OK vom Server durch das Benutzerendgerät, wobei die Antwort 200OK eine Gewährungsidentifikation der Programmautorisierungsanforderung befördert und eine Adresse eines RTSP-Servers bereitstellt, der einen Media Stream des Programms sendet;
Senden einer Zuschauanforderung an den RTSP-Server des Programms durch das Benutzerendgerät nach dem Empfangen der Gewährungsidentifikation;
Empfangen von Streaming Media des autorisierten Programms vom RTSP-Server durch das Benutzerendgerät, nachdem der RTSP-Server die Zuschauanforderung empfängt.

3. Abspielsteuerverfahren nach Anspruch 1 oder 2, wobei das Durchführen einer Operation des Zugreifens auf das Programm durch das Benutzerendgerät entsprechend den Steuerungsanforderungsinformationen aufweist:
Verlassen einer Multicast-Gruppe eines gegenwärtig angeschauten Programms durch das Benutzerendgerät und Zuschalten zu einer Multicast-Gruppe eines Programms des Kinderkanals entsprechend Programm- oder Kanalsteuerinformationen, Programm- oder Kanalinformationen und Identifikationsinformationen der Abspielsteuerungsverarbeitungsentität, die in den Steuerungsanforderungsinformationen befördert werden.

4. Abspielsteuerverfahren, das die folgenden Schritte aufweist:
Fernüberwachen durch eine Steuerungsentität eines Dritten eines durch ein Benutzerendgerät abgespielten Programms, nachdem das Benutzerendgerät eine Programmautorisierung eines Servers besteht und das Benutzerendgerät ein autorisiertes Programm auf dem Benutzerendgerät abspielt, wobei das autorisierte Programm durch einen RTSP-Server bereitgestellt wird;
Anfordern durch die Steuerungsentität eines Dritten, sich dem durch das Benutzerendgerät abgespielten autorisierten Programm zuzuschalten;
Durchführen durch die Steuerungsentität eines Dritten einer Operation, sich dem autorisierten Programm zuzuschalten;
Senden durch die Steuerungsentität eines Dritten von Steuerungsanforderungsinformationen an das Benutzerendgerät zum Durchführen einer Operation des Zugreifens auf ein Programm entsprechend den Steuerungsanforderungsinformationen.

5. Abspielsteuerverfahren nach Anspruch 4, wobei das Anfordern durch die Steuerungsentität eines Dritten, sich dem durch das Benutzerendgerät abgespielten autorisierten Programm zuzuschalten, aufweist:
Senden durch die Steuerungsentität eines Dritten einer Abonnementsanforderung zum Erhalten des durch das Benutzerendgerät abgespielten autorisierten Programms an den Server, wobei die Anforderung eine Programmidentifikation und einen elterlichen Kontrollparameter befördert;
Empfangen durch die Steuerungsentität eines Dritten einer Antwort 200OK vom Server, nachdem der Server selbst sucht, um die Position des Programms oder des Kanals des Benutzerendgeräts entsprechend der empfangenen Abonnementsanforderung zu erhalten, wobei die Antwort 200OK eine Programmidentifikation und eine Programmabspiel-Positionsidentifikation befördert und eine Adresse des RTSP-Servers bereitstellt, der den Media Stream des Programms sendet;
Senden durch die Steuerungsentität eines Dritten einer Zuschaltanforderung, die die Programmidentifikation und die Programmabspiel-Positionsidentifikation befördert, an den RTSP-Server des Programms nach dem Empfangen der 200OK Antwort;
Empfangen durch die Steuerungsentität eines Dritten von Streaming Media vom RTSP-Server entsprechend der in der Anforderung beförderten Programmidentifikation und Programmabspiel-Positionsidentifikation;
Zuschalten durch die Steuerungsentität eines Dritten zum durch das Benutzerendgerät abgespielten autorisierten Programm und Beginnen des Zuschauens von einer Abspielposition des Benutzerendgeräts.

6. System zur Abspielsteuerung, das Folgendes aufweist:
ein Benutzerendgerät, das eingerichtet ist, eine Programmautorisierung eines Servers zu bestehen, ein autorisiertes Programm auf dem Benutzerendgerät abzuspielen, wobei das autorisierte Programm durch einen RTSP-Server bereitgestellt wird, Steuerungsanforderungsinformationen von einer Steuerungsentität eines Dritten zu empfangen und eine Operation des Zugreifens auf ein Programm entsprechend den Steuerungsanforderungsinformationen durchzuführen;
die Steuerungsentität eines Dritten, die eingerichtet ist, das durch das Benutzerendgerät abgespielte autorisierte Programm aus der Ferne zu überwachen, anzufordern, sich dem durch das Benutzerendgerät abgespielten autorisierten Programm zuzuschalten, und dann die Steuerungsanforderungsinformationen an das Benutzerendgerät zu senden.

7. System nach Anspruch 6, wobei das Benutzerendgerät insbesondere eingerichtet ist:
eine Multicast-Gruppe eines gegenwärtig angeschauten Programms zu verlassen und sich einer Multicast-Gruppe eines Programms des Kinderkanals entsprechend Programm- oder Kanalsteuerinformationen, Programm- oder Kanalinformationen und Identifikationsinformationen der Abspielsteuerungsverarbeitungsentität zuzuschalten, die in den Steuerungsanforderungsinformationen befördert werden.

8. System nach Anspruch 6, wobei die Steuerungsentität eines Dritten insbesondere eingerichtet ist:
eine Abonnementsanforderung zum Erhalten des durch das Benutzerendgerät abgespielten autorisierten Programms an den Server zu senden, wobei die Anforderung eine Programmidentifikation und einen elterlichen Kontrollparameter befördert;
eine Antwort 200OK vom Server zu empfangen, nachdem der Server selbst sucht, um die Position des Programms oder Kanals des Benutzerendgeräts entsprechend der empfangenen Abonnementsanforderung zu erhalten, wobei die Antwort 200OK eine Programmidentifikation und eine Programmabspiel-Positionsidentifikation befördert und eine Adresse des RTSP-Servers bereitstellt, der den Media Stream des Programms sendet;
eine Zuschaltanforderung, die die Programmidentifikation und die Programmabspiel-Positionsidentifikation befördert, an den RTSP-Server des Programms nach dem Empfangen der 200OK-Antwort zu senden;
Streaming Media vom RTSP-Server entsprechend der in der Anforderung beförderten Programmidentifikation und Programmabspiel-Positionsidentifikation zu empfangen;
sich dem durch das Benutzerendgerät abgespielten autorisierten Programm zuzuschalten und mit dem Zuschauen von einer Abspielposition des Benutzerendgeräts zu beginnen.

## Revendications

1. Procédé de commande de lecture, comprenant les étapes consistant à :
passer avec succès, par un terminal d'utilisateur, une autorisation de programme d'un serveur ;
lire, par le terminal d'utilisateur, un programme autorisé sur le terminal d'utilisateur, le programme autorisé étant fourni par un serveur RTSP ;
recevoir (1202), par le terminal d'utilisateur, des informations de demande de commande émanant d'une entité de commande tierce une fois que l'entité de commande tierce surveille à distance (1201) le programme autorisé lu par le terminal d'utilisateur et que l'entité de commande tierce demande (1202) d'adhérer au programme autorisé lu par le terminal d'utilisateur ; et
exécuter (1203), par le terminal d'utilisateur, une opération d'accès à un programme conformément aux informations de demande de commande.

2. Procédé de commande de lecture selon la revendication 1, dans lequel l'étape consistant à passer avec succès, par un terminal d'utilisateur, une autorisation de programme d'un serveur comprend les étapes consistant à :
transmettre, par le terminal d'utilisateur, une demande d'autorisation de programme au serveur ;
recevoir, par le terminal d'utilisateur, une réponse 2000K émanant du serveur, la réponse 2000K contenant une identification d'octroi associée à la demande d'autorisation de programme et fournissant une adresse d'un serveur RTSP transmettant un flux média du programme ;
transmettre, par le terminal d'utilisateur, une demande de visionnage au serveur RTSP du programme une fois qu'il reçoit l'identification d'octroi ;
recevoir, par le terminal d'utilisateur, le média diffusé en flux du programme autorisé émanant du serveur RTSP une fois que le serveur RTSP reçoit la demande de visionnage.

3. Procédé de commande de lecture selon la revendication 1 ou 2, dans lequel l'étape consistant à exécuter, par le terminal d'utilisateur, une opération d'accès au programme conformément aux informations de demande de commande comprend l'étape consistant à :
quitter, par le terminal d'utilisateur, un groupe de multidiffusion d'un programme en cours de visionnage et adhérer, par le terminal d'utilisateur, à un groupe de multidiffusion d'un programme de la chaîne pour enfants conformément à des informations de commande de programme ou de chaîne, à des informations de programme ou de chaîne et à des informations d'identification associées à l'entité de traitement de commande de lecture contenues dans les informations de demande de commande.

4. Procédé de commande de lecture, comprenant les étapes consistant à :
surveiller à distance, par une entité de commande tierce, un programme lu par un terminal d'utilisateur une fois que le terminal d'utilisateur passe avec succès une autorisation de programme d'un serveur et que le terminal d'utilisateur lit un programme autorisé sur le terminal d'utilisateur, le programme autorisé étant fourni par un serveur RTSP ;
demander, par l'entité de commande tierce, d'adhérer au programme autorisé lu par le terminal d'utilisateur ;
exécuter, par l'entité de commande tierce, une opération d'adhésion au programme autorisé ;
transmettre, par l'entité de commande tierce, des informations de demande de commande au terminal d'utilisateur permettant d'exécuter une opération d'accès à un programme conformément aux informations de demande de commande.

5. Procédé de commande de lecture selon la revendication 4, l'étape consistant à demander, par l'entité de commande tierce, d'adhérer au programme autorisé lu par le terminal d'utilisateur comprend les étapes consistant à :
transmettre, par l'entité de commande tierce, au serveur, une demande d'abonnement pour obtenir le programme autorisé lu par le terminal d'utilisateur, la demande contenant une identification de programme et un paramètre de contrôle parental ;
recevoir, par l'entité de commande tierce, une réponse 2000K, émanant du serveur, une fois que le serveur effectue une recherche interne dans le but d'obtenir la position du programme ou de la chaîne du terminal d'utilisateur conformément à la demande d'abonnement reçue, la réponse 2000K contenant une identification de programme et une identification de position de lecture de programme et fournissant une adresse du serveur RTSP transmettant le flux média du programme ;
transmettre, par l'entité de commande tierce, au serveur RTSP du programme, une demande d'adhésion contenant l'identification de programme et l'identification de position de lecture de programme une fois qu'elle reçoit la réponse 2000K ;
recevoir, par l'entité de commande tierce, un média diffusé en flux émanant du serveur RTSP conformément à l'identification de programme et à l'identification de position de lecture de programme contenues dans la demande ;
adhérer, par l'entité de commande tierce, au programme autorisé lu par le terminal d'utilisateur, et débuter le visionnage à partir d'une position de lecture du terminal d'utilisateur.

6. Système de commande de lecture, comprenant :
un terminal d'utilisateur, adapté à passer avec succès une autorisation de programme d'un serveur, lire un programme autorisé sur le terminal d'utilisateur, le programme autorisé étant fourni par un serveur RTSP, recevoir des informations de demande de commande émanant d'une entité de commande tierce et exécuter une opération d'accès à un programme conformément aux informations de demande de commande ;
la entité de commande tierce, adaptée à surveiller à distance le programme autorisé lu par le terminal d'utilisateur, demander d'adhérer au programme autorisé lu par le terminal d'utilisateur, puis transmettre les informations de demande de commande au terminal d'utilisateur.

7. Système selon la revendication 6, dans lequel le terminal d'utilisateur est plus particulièrement adapté à : quitter un groupe de multidiffusion d'un programme en cours de visionnage et adhérer à un groupe de multidiffusion d'un programme de la chaîne pour enfants conformément à des informations de commande de programme ou de chaîne, à des informations de programme ou de chaîne et à des informations d'identification associées à l'entité de traitement de commande de lecture contenues dans les informations de demande de commande.

8. Système selon la revendication 6, dans lequel l'entité de commande tierce est plus particulièrement adaptée à :
transmettre, au serveur, une demande d'abonnement pour obtenir le programme autorisé lu par le terminal d'utilisateur, la demande contenant une identification de programme et un paramètre de contrôle parental ;
recevoir une réponse 2000K, émanant du serveur, une fois que le serveur effectue une recherche interne dans le but d'obtenir la position du programme ou de la chaîne du terminal d'utilisateur conformément à la demande d'abonnement reçue, la réponse 2000K contenant une identification de programme et une identification de position de lecture de programme et fournissant une adresse du serveur RTSP transmettant le flux média du programme ;
transmettre au serveur RTSP du programme, une demande d'adhésion contenant l'identification de programme et l'identification de position de lecture de programme une fois la réponse 2000K reçue ;
recevoir un média diffusé en flux émanant du serveur RTSP conformément à l'identification de programme et à l'identification de position de lecture de programme contenues dans la demande ;
adhérer au programme autorisé lu par le terminal d'utilisateur, et débuter le visionnage à partir d'une position de lecture du terminal d'utilisateur.
